# EUROPEAN PATENT SPECIFICATION

(11) **EP 3 472 108 B1**
(45) Date of publication and mention of the grant of the patent: **23.09.2026**
(21) Application number: 17813699.0
(22) Date of filing: 15.06.2017
(51) Int. Cl.: C02F 11/06, C02F 1/52, C02F 1/66, C02F 11/12, C02F 1/72, C02F 1/74, C02F 1/56, C02F 11/14, C02F 11/121, C02F 11/122, C02F 11/13, C02F 11/143

(54) **METHOD FOR RECOVERING COAGULANTS FROM CHEMICAL WASTEWATER FROM WATER AND WASTE WATER TREATMENT PLANTS**
VERFAHREN ZUR RÜCKGEWINNUNG VON KOAGULANZIEN AUS CHEMISCHEM ABWASSER AUS WASSER UND KLÄRANLAGEN
PROCÉDÉ DE RÉCUPÉRATION DE COAGULANTS DANS DES EAUX USÉES CHIMIQUES PROVENANT D'INSTALLATIONS DE TRAITEMENT DE L'EAU ET DES EAUX USÉES

(30) Priority: 16.06.2016 SE 1600196
(43) Date of publication of application: 24.04.2019
(73) Proprietor: Ulmert, Hans David Staffan, 224 67 Lund (SE)
(72) Inventor: Ulmert, Hans David Staffan, 224 67 Lund (SE)
(74) Representative: Öberg & Sjöberg AB
(86) International application number: PCT/SE2017/050644
(87) International publication number: WO 2017/217921

(56) References cited:
- EP-A1- 0 801 029
- EP-A1- 0 801 029
- WO-A1-03/099728
- WO-A1-03/099728
- WO-A1-2004/094320
- WO-A1-2004/094320
- JP-A- S52 138 092
- JP-A- S52 138 092
- JP-A- S52 138 092
- KR-A- 20130 054 557
- KR-A- 20130 054 557
- SU-A1- 1 357 353
- US-A- 3 959 133
- US-A- 3 959 133
- US-A1- 2010 163 486
- US-A1- 2010 163 486
- US-B1- 6 800 109

## Description

### Technical field of the invention

The present invention relates to a method of treating chemical sludge according to the preamble of the independent claim.

In particular, it relates to such a method of treating sludge from water and wastewater treatment.

### Background of the invention

Chemical precipitation is common in the treatment of raw water for drinking or process water and for the treatment of wastewater. Dominant precipitation chemicals are trivalent aluminum and iron salts. When the precipitation chemicals are supplied to the water a precipitate of metal hydroxide is formed, provided that the alkalinity is high enough. The precipitate forms flocks in the water that enclose and adsorb suspended and dissolved organic substances. The formed flocks are separated by, for example, sedimentation, flotation and/or filtration. The sludge thus formed contains partly the separated pollutants, and partly the hydroxide formed upon addition of the metal salt. When separated using sedimentation or filtration, the separated sludge typically has a solids content (TS content) of <1%, while flotation can produce a TS content of 2-3%. In order to reduce the sludge volume and hence the landfill costs, it is common for the sludge to be dewatered. For sludges with a low input TS content, it is also common for a pre-thickening to occur. This is usually done with a sedimentation or flotation thickener, thus reducing the sludge volume to be dewatered. Dewatering is usually a mechanical dewatering, i.e. it is made by means of a centrifuge, screw-, belt- or chamber filter press. In order to achieve an optimal TS content of the dewatered sludge and a clear water phase with a low content of suspended substances, the addition of a polymer is often required. When dewatering sludges from water treatment, a TS content of 15-20% is usually reached, while during chemical coagulation of biologically treated water typically a TS content of 20-25% is reached. The reason for not normally reaching higher levels of TS without the addition of filter aids, such as lime, is that the newly formed hydroxide is hydrophilic and gel-forming. As much as 50% of the, in the sludge separated TS-content can be made up of the formed metal hydroxide. If the metal hydroxide were to be separated from the sludge the amount of sludge would be reduced while recycled metal salt could be recycled as a precipitation chemical. A reduced amount of sludge further reduces the removal cost and opens the possibility, for example, of combusting the sludge or spreading it on farmland.

A variety of methods for recycling aluminum and iron ions from water and sewage sludge have been studied. In the article "Coagulant Recovery from Water Treatment Residuals: a Review of Applicable Technologies" (J. Keeley et al., Critical Reviews in Environmental Science and Technologies, 44:24, 2675-2717) is given a summary of these. The majority of the methods are based on the treating the sludge with an acid, such as sulfuric acid, in order to dissolve the aluminum or iron hydroxide according to the reaction:

Me(OH)₃ + 3H⁺ = Me³⁺ + 3H₂O

where Me stands for the metal, i.e. Fe or Al.

In order to recover the released coagulant, i.e. the iron and/or aluminum ions, the coagulant must be best possibly separated from the simultaneously released suspended and dissolved organic substances. A method for the recovery of coagulants is practiced by some water treatment plants wherein sludge is pumped to a waste water treatment plant, in some cases after acidification. The latter is only practiced when the waste water treatment plant is adjacent to the water treatment plant, i.e. when it is practically possible to transfer the sludge into a separate line. The process entails that the solids content of the water treatment plant sludge is directly transferred to the waste water treatment plant, which leads to a corresponding increase in the waste water treatment plant's sludge volume and partly to an increase in the COD (Chemical Oxygen Demand) and SS (Suspended Solids) in the plant. Although the method has major limitations, the aluminum and/or iron hydroxide present in the water treatment plant sludge can contribute to a reduction in phosphorus content.

The proposed coagulant recovery methods preferably start from pre-thickened sludge, i.e. sludge with a TS content of 1-3%. Acid is added to the sludge to dissolve the hydroxide, yielding a pH of 1.5-2.5. At this pH, high molecular weight humus substances may also coagulate. As an example, by adding a polyelectrolyte some of the precipitated organic substances, as well as dissolved inorganic substances such as silicon particles, can be flocked together and separated by for example filtration. This technique is known from inter alia WO 9400394 A1 and US 3959133 A. The disadvantages of this technology are that the filtrate will contain a large amount of solved organic substances that cannot be precipitated and separated. As a result, the filtrate containing the recovered coagulant is in many cases not suitable for direct reuse in water or wastewater treatment plants. WO 9400394 teaches that the problem of residual organic substances in the filtrate can be solved by adsorbing the substances in an ion exchanger. However, ion exchange materials are easily "poisoned" with organic substances and therefore have to be replaced frequently, which makes the process inefficient and costly to operate. In the article "The ReAl process. A Combined Membrane and Precipitation Process for the Recovery of Aluminum from Waterworks Sludge "(H. Ulmer et al., Water 61.273-281. Lund 2015) a method is described to obtain a clean recycled aluminum coagulant in 4 consecutive steps. The four steps include: acidification, ultrafiltration, nanofiltration and precipitation of potassium aluminum sulfate. This is a working method for producing a pure coagulant, but with the disadvantage that it is both costly and complicated. Further examples of relevant methods of coagulant recovery are found in KR 2013 0054557 A and JP S52 138092 A.

An object of the invention is therefore to provide a method of recovering aluminum and/or iron ions in the form of metal sulfate from chemical sludge from water and wastewater treatment plants.

These and other objects are achieved by a recycling method according to the characterizing elements of the independent claim.

### Summary of the invention

The present invention relates to a method of recovering aluminum and/or iron coagulant from dewatered and dried sludge from water treatment plants and waste water treatment plants, wherein concentrated sulfuric acid in an amount proportional to the amount of aluminum and/or iron hydroxide and organic matter in the sludge is added to the sludge dewatered and dried beyond the solids content (the TS content) of 15-25%, the concentrated sulfuric acid in such an amount that:
i) the aluminum and/or iron hydroxides in the sludge are converted into aluminum and/or iron sulfate, and
ii) at least 70% of the carbon bound in organic compounds is converted into elemental carbon, and
iii) the reaction temperature R during the mixing of the sludge and the acid is given by 100 °C < R < 337 °C.

The major part of the carbon bound in organic compounds may be at least 70% of the carbon bound in organic compounds, such as at least 80% of the carbon bound in organic compounds. Typically the major part of the carbon bound in organic compounds may be from 70-100%, such as 70-99%, 90-100% or 90-99%, 80-100% such as 80-99%, or 90-100% such as 90-99%, or 70-95%, 80-95%, or 90-95% of the carbon bound in organic compounds.

In a particularly advantageous embodiment water is added to the reaction products, after which residual suspended substances in the solution are separated by filtration.

The present invention is based on the fact that concentrated sulfuric acid has strong oxidizing properties and produces an exothermic reaction with water. If concentrated sulfuric acid (96-98%) is added to sludge containing organic substances and aluminum and/or iron hydroxide, the following main reactions occur:

Reaction 1: 2Me(OH)₃ x(H2O)ₙ + 3H₂SO₄ = Me₂(S0₄)₃x(H₂O)ₙ + 3H₂O

Reaction 2: Cn Oy Hx + Z H+ = N C + YH₂O

wherein Cn Oy Hx represents carbon chains, i.e. organic compounds, with unknown, i.e. n, y and x, number of carbon, oxygen and hydrogen atoms.

In order for both reactions to occur, an amount of sulfuric acid sufficient to maintain a reaction temperature of > 100° C is required, which entails that the water formed in the reaction, and the water that was present in sludge before the reaction, is evaporated. If these requirements are met the following secondary reactions may occur:

Reaction 3: 2C + O₂ = 2CO

Reaction 4: C + O₂ = CO₂

Reactions 3 and 4 also require oxygen to be present. Ideally, the amount of sulfuric acid added should not exceed the amount required to dissolve all metal hydroxide and to form elemental carbon. The sulfuric acid consumption is thus proportional to the amount of hydroxide and organic matter in the sludge. If the water content in the sludge is too high, the sulfuric acid consumption will increase. The reason is that the exothermic reaction that occurs during the addition of acid should cause so much water that main reaction 2 starts. This means that the sludge must be dried beyond the TS content of 15-25% normally obtained by conventional dewatering of chemical sludge. One method to obtain this is by thermal drying, which means that heat is used to evaporate water. Using the drying, TS levels of more than 90% are achievable. There are various types of thermal drying, such as fluidized drying beds, band dryers, dryers and rotary drums. In principle, treatment is either based on direct or indirect drying. The energy consumption corresponds to the energy required to heat and evaporate the water in the sludge, i.e. 4.2 kJ/kg of water and °C and 2240 kJ/kg of water, respectively. The energy cost thus becomes significant if waste heat from a nearby industry or gas from a fermentation chamber cannot be used for heating. In some cases, as in the forest industry, there is often access to waste heat which can be used for drying. In a warm climate and/or with low humidity the sludge may be laid on the floor in weather-resistant ventilated premises. Scrapers rotate the sludge continuously so that it dries over time. The latter methods, of course, reduce the cost of drying to a minimum.

As can be seen from the foregoing, the invention involves adding sulfuric acid to a dried sludge in such an amount that the metal hydroxide dissolves and that the carbon in organic compounds is primarily converted to elemental carbon and then optionally oxidized to CO or CO₂. Furthermore, the temperature of the reaction must be so high that free water is discharged/evaporated. However, the reaction temperature shall not exceed 337 ° C, which is the boiling point of the sulfuric acid. In the temperature range of 100 - 337 ° C, in addition to clean water, low boiling organic compounds are also discharged, including azeotropes thereof. Vapor droplets consisting of sulfuric acid and water will also be evaporated. This steam can advantageously be led to and cleaned in a scrubber. If the required reaction temperature is not achieved, one can advantageously heat the added sulfuric acid or otherwise add heat. When the reaction is completed, the sludge residue shall consist of iron and/or aluminum sulfate, carbon, and inorganic salts and minerals. Depending on the temperature at which the reaction occurs, crystal water may also occur. The dry final product can be transported to other treatment plants and mixed with water and then dosed as a replacement for pure coagulant. Water may also be added to the dry sludge residue at the site, whereby the recovered coagulant as well as other water-soluble salts is dissolved. After dissolution, the pH of the obtained solution can be measured. If the pH would be less than about 1.5 in the solution, this is an indication that an excess of acid has been used and vice versa. If the pH signal is fed back to the dosage of acid, the amount to add can be optimized. Another method is to add aluminum and/or iron hydroxide to neutralize the acid surplus. The latter raises the residual value of the recovered coagulant solution. Similarly, the reaction temperature may be fed back to the sludge drying and/or to the temperature of the supplied acid. At too high a reaction temperature the water content of the sludge can be increased during drying, and vice versa. If a sufficient reaction temperature is not reached, despite the maximum dry content of the sludge, heat can be supplied, for example.

One of the advantages of the invention is that residual carbon is not water-soluble and therefore does not supply BOD or COD in conjunction with reuse of the coagulant. The coagulant concentration is also in par with the "pure products" sold on the market in contrast to most other recovery methods. This in turn reduces the cost of transport if the recovered coagulant is to be transported to another waterworks or waste water treatment plant. There may be an interest in reducing the insoluble part of the acid-treated sludge as this will contribute to the sludge production of the work in which the recovered coagulant is used. One way of separating insoluble (suspended) substance is to filter the solution. In this case a chamber filter press may advantageously be used. The lack of iron or aluminum hydroxide and organic substances in the solution makes the filtration and drainage properties very good and a residual slurry with high TS content can be achieved. A further improvement in the separation properties can be obtained if polymer is supplied to flock the fine-suspended substances. In order to strengthen and enlarge flocks, for example in chemical precipitation, several polymers are used in many cases. Polymer is also added to provide a faster and better sludge drainage in, for example, belt or chamber filter presses and centrifugation. A common type of polymer in water purification is polyacrylamide which is available with varying molecular weight and charge. The long and charged chains of the polymers often have no, or greatly reduced, flocculation ability at low pH, and when conductivity is high, i.e. under the conditions present after dissolution of dried and acidified chemical sludge. The reason for this is that in these conditions the polymers lose their chain form, which is significant for flocking. Conventional polymers, therefore, cannot achieve a satisfactory flocculation of the particles remaining after dissolving the residual sludge after the acid reaction. A surprising effect achieved according to the invention is that a hydrophobized polymer, advantageously a highly hydrophobized polymer, retains its flocculation properties even at low pH and high conductivity. Another method of improving the separation properties is to coat the filter cloth with, for example, diatomaceous earth. A slurry of diatomaceous earth and water is then pumped through the filter press to coat the fabrics (pre-coat).

In the following example, in respect of water treatment plant sludge after precipitation with aluminum, the content of organic substances is assumed to be 30% of TS, of which 60% is C. Further, it is assumed that the Al content is 10% of TS.

1 kg of dried sludge (100 % TS) would thereby contain 180 g C, and if we for simplicity assume that the remainder, i.e. 120 g (7 moles) is made up of OH⁻ groups, we get:
7 moles OH⁻ + 3.5 moles H₂SO₄ = 7 moles H₂O + 3.5 moles SO₄²⁻. 7 moles H₂O x 18 = 126 g H₂O. 3.5 moles SO₄²⁻ x 96 = 336 g H₂SO₄
1 kg dried sludge (100% TS) would then contain 100 g Al which will bind 11 moles of OH⁻.
11 moles OH⁻ + 5.5 moles H₂SO₄ = 11 moles H₂O + 5.5 moles SO₄²⁻. 11 moles H₂O x 18 = 198 g H₂O. 5.5 moles SO₄²⁻ x 98 = 539 g H₂SO₄
Total H₂SO₄ consumption = 882 g. Total amount of water produced 18 moles x 18 = 324 g

A water treatment plant which produces 1000 tons of sludge with 20% TS would, under the conditions given above, be able to reduce the amount of sludge to 200 tons after drying + 173 tons as added acid - 65 tons as evaporated water (provided that the water is not taken up as crystal water) - 127 tons of recovered aluminum sulfate = 184 tons (100% TS). With 50% TS after filtration and dewatering the amount of residual sludge becomes 360 tons, i.e. the amount of sludge is reduced by approximately 60%.

The energy value (calorific value) of elemental carbon is about 30 MJ/kg. In the example above there should be 36 tons of carbon in the residual sludge with a total heat/energy value of about 1000000 MJ. 2576 MJ/ton is required to heat and evaporate a ton of water, i.e. the residual amount of water in the sludge would require 184 tons x 2576 MJ / ton = about 500,000 MJ to heat and evaporate. There would thus be a positive heat value in the dewatered residual product, which means that it could be combusted without supplemental heat, for example in a combined heat and power plant. Iron and/or aluminum content is low, so the risk of damage to the boiler walls is negligible. Removal of the sludge in other ways, such as in a landfill or spreading on farmland, should not be a problem as the sludge contains biochar and inert compounds.

Remaining solution in the filter cake, after the filter press has been filled with dewatered sludge, will contain the same coagulant content as that in the filtrate. By first displacing the remaining solution with compressed air and then with clean water, the level of coagulant in the filter cake can be reduced to a minimum. An advantage is then to add calcium ions, for example in the form of calcium chloride, to the clean water. Thereby residual sulfate ions and added calcium can form gypsum, which helps to reduce the water content of the cake. From the point of view of disposal, it is advantageous that the filter cake maintains a near neutral pH. It is not practically possible to displace all hydrogen ions and all coagulants from the filter cake, and the cake will therefore be acidic and contain free aluminum and/or iron ions. In order to neutralize the cake it is possible, after displacement with clean water, optionally with the addition of calcium ions, to displace the residual liquid with a solution containing hydroxide ions. The source of the hydroxide ions may be, for example, sodium, calcium or magnesium hydroxide. The alkaline liquid, or slurry, is pumped through the filter cake. In this way the remaining hydrogen ions are neutralized to water and the aluminum and/or iron ions are precipitated as hydroxide. An alternative method of neutralizing the filter cake is to empty the press, and then mechanically mixing lime or magnesium hydroxide into the cake. By a displacement of the solution from the filter cake, a coagulant recovery rate of> 95% can be achieved.

If water is added to a total of 5 times the mass of reacted sludge, then an aluminum concentration in the solution of about 2% is obtained in the example above. This should be compared with the recycling methods based on thin or pre-thickened sludge where the aluminum content of the recycled solution can reach a maximum of 0.3%. Regardless of the method, the recycled solution will always contain a monomeric coagulant. There may be waterworks or water treatment plants that wish to use the recycled coagulant but previously used a coagulant with elevated basicity (polymeric coagulant) and found this to work better than a monomeric coagulant. The recovery method represented by the invention can also solve this problem, in contrast to most alternative methods in the prior art. The reason for this is that it is possible to increase the basicity (i.e. the degree of polymerization) in a coagulant solution having a metal concentration of > 1% by adding OH⁻ ions. At lower levels, for example, <0.3%, as in the prior art methods, a precipitate of aluminum hydroxide is formed upon the addition of the OH⁻ ions, instead of the desired polymerization. The method of increasing the basicity of a coagulant solution by the addition of OH⁻ ions in the form of, for example Mg, Ca or Na hydroxide, is described in the literature but has not been applied to recycled coagulants for the above reasons.

### Brief description of the drawing

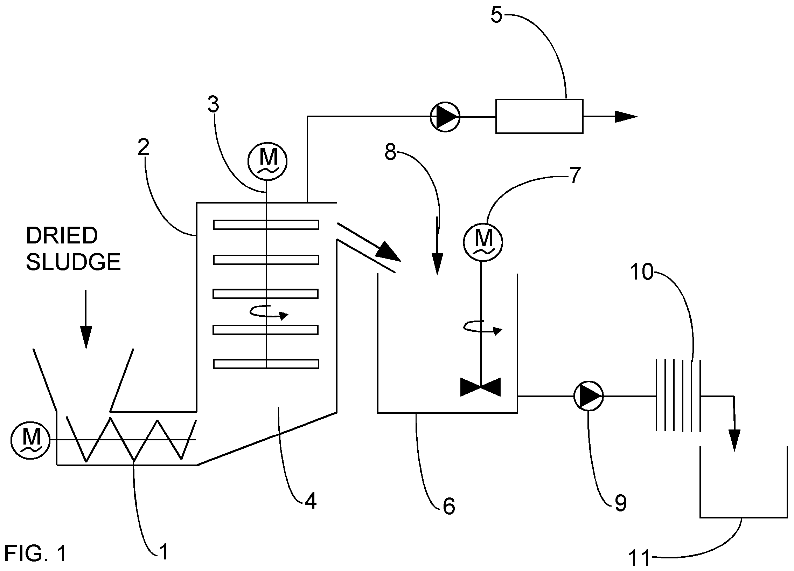

Figure 1 describes an embodiment of a device for performing the method according to the invention.

### Detailed description of the invention

The following description refers to Figure 1. Separated sludge from a chemical precipitation plant is thickened and then pumped to a conventional dewatering step, giving the sludge a TS content of 15-25%. Thereafter the dehydrated sludge is dried. (These first treatment steps are not shown in the figure.) The dried sludge is conveyed by a screw (1) to a reactor tank (2) provided with a mixer (3). The screw forces the sludge into the bottom of the reactor, where concentrated sulfuric acid (4) is also added. Sludge and sulfuric acid is allowed to react while being mixed and pressed upwards in the tank. The sludge which has reacted with the sulfuric acid is ultimately discharged from the upper part of the reactor. Discharged gases and water vapor from the reactor are passed through a fan device to a wet scrubber (5). The sludge from the reactor containing recovered coagulant can be transported to another chemical-precipitation work and used as a replacement for pure coagulant. A further possibility is that the sludge is led to a dissolution tank (6) provided with a stirrer (7) where it is mixed with water (8). The recovered coagulant, as well as other salts, dissolves in the water while insoluble matter forms a suspension. The water is pumped (9) from the dissolution tank to a chamber filter press (10). In the filter press suspended substance is separated from the solution. The filtered solution is led to a storage tank (11). The solution containing the recycled coagulant can be recirculated in the chemical precipitation plant or transported to other (waste) water treatment plants where it completely or partially replaces pure coagulant. The filter cake from the press may be deposited in a landfill, spread on farmland or burned.

## Claims

1. A method of recovering aluminum and/or iron coagulant from dewatered and dried sludge from water treatment plants and waste water treatment plants, **characterized in that** concentrated sulfuric acid in an amount proportional to the amount of aluminum and/or iron hydroxide and organic matter in the sludge is added to the sludge dewatered and dried beyond the solids content (the TS content) of 15-25%, the concentrated sulfuric acid in such an amount that:
i) the aluminum and/or iron hydroxides in the sludge are converted into aluminum and/or iron sulfate, and
ii) at least 70% of the carbon bound in organic compounds is converted into elemental carbon, and
iii) the reaction temperature R during the mixing of the sludge and the acid is given by 100 °C < R < 337 °C.

2. The method according to claim 1, **characterized in that** water is added to the sludge which has been reacted with the acid, and **in that** the obtained solution containing recovered aluminum and/or iron ions is filtered to remove suspended substances.

3. The method according to claim 2, **characterized in that** the total amount of added water is limited so that the metal concentration in the filtered obtained solution is > 1%.

4. The method according to any of the claims 2-3,
**characterized in that** a hydrophobized polymer is added to the solution before filtration.

5. The method according to any of the claims 2-4,
**characterized in t**hat the filtration is performed through a filter cloth coated with diatomaceous earth.

6. The method according to any of the claims 2-5,
**characterized in that** a surplus of free acid in the filtrate is neutralized by the addition of aluminum and/or iron hydroxide.

7. The method according to any of the claims 2-6,
**characterized in that** the pH of the solution is used to control the addition of acid.

8. The method according to any of the preceding claims, **characterized in that** air and/or oxygen gas is added to the reaction between sludge and sulfuric acid.

## Patentansprüche

1. Verfahren zum Rückgewinnen von Aluminium- und/oder Eisen-Koagulationsmittel aus entwässertem und getrocknetem Schlamm aus Wasseraufbereitungsanlagen und Abwasserbehandlungsanlagen, **dadurch gekennzeichnet, dass** konzentrierte Schwefelsäure in einer Menge, die proportional zu der Menge an Aluminium- und/oder Eisenhydroxid und organischer Substanz in dem Schlamm ist, dem auf über den Feststoffgehalt (den TS-Gehalt) von 15-25 % entwässerten und getrockneten Schlamm zugegeben wird, wobei die konzentrierte Schwefelsäure in einer solchen Menge vorliegt, dass:
i) die Aluminium- und/oder Eisenhydroxide in dem Schlamm in Aluminium- und/oder Eisensulfat umgewandelt werden, und
ii) mindestens 70 % des in organischen Verbindungen gebundenen Kohlenstoffs in elementaren Kohlenstoff umgewandelt werden, und
iii) die Reaktionstemperatur R während des Mischens des Schlamms und der Säure durch 100 °C < R < 337 °C gegeben ist.

2. Verfahren nach Anspruch 1, **dadurch gekennzeichnet, dass** Wasser dem Schlamm, der mit der Säure reagiert hat, zugegeben wird, und **dass** die erhaltene, rückgewonnene Aluminium- und/oder Eisenionen enthaltende Lösung filtriert wird, um Schwebstoffe zu entfernen.

3. Verfahren nach Anspruch 2, **dadurch gekennzeichnet, dass** die Gesamtmenge des zugegebenen Wassers so begrenzt ist, dass die Metallkonzentration in der filtrierten erhaltenen Lösung > 1 % ist.

4. Verfahren nach einem der Ansprüche 2-3, **dadurch gekennzeichnet, dass** ein hydrophobiertes Polymer der Lösung vor der Filtration zugegeben wird.

5. Verfahren nach einem der Ansprüche 2-4, **dadurch gekennzeichnet, dass** die Filtration durch ein mit Kieselgur beschichtetes Filtertuch durchgeführt wird.

6. Verfahren nach einem der Ansprüche 2-5, **dadurch gekennzeichnet, dass** ein Überschuss an freier Säure in dem Filtrat durch die Zugabe von Aluminium- und/oder Eisenhydroxid neutralisiert wird.

7. Verfahren nach einem der Ansprüche 2-6, **dadurch gekennzeichnet, dass** der pH-Wert der Lösung zum Steuern der Zugabe von Säure verwendet wird.

8. Verfahren nach einem der vorstehenden Ansprüche, **dadurch gekennzeichnet, dass** Luft und/oder Sauerstoffgas der Reaktion zwischen Schlamm und Schwefelsäure zugegeben wird.

## Revendications

1. Procédé de récupération de coagulant d'aluminium et/ou de fer à partir de boues déshydratées et séchées provenant d'installations de traitement de l'eau et d'installations de traitement des eaux usées, **caractérisé en ce que** de l'acide sulfurique concentré, en une quantité proportionnelle à la quantité d'hydroxyde d'aluminium et/ou de fer et de matière organique présente dans les boues, est ajouté aux boues déshydratées et séchées au-delà de la teneur en matières sèches (teneur en MS) de 15 à 25 %, l'acide sulfurique concentré étant ajouté en une quantité telle que :
i) les hydroxydes d'aluminium et/ou de fer présents dans les boues sont convertis en sulfate d'aluminium et/ou de fer, et
ii) au moins 70 % du carbone lié aux composés organiques est converti en carbone élémentaire, et
iii) la température de réaction R lors du mélange des boues et de l'acide est définie par 100 °C < R < 337 °C.

2. Procédé selon la revendication 1, **caractérisé en ce que** de l'eau est ajoutée aux boues ayant réagi avec l'acide, et **en ce que** la solution obtenue contenant des ions d'aluminium et/ou de fer récupérés est filtrée pour éliminer les matières en suspension.

3. Procédé selon la revendication 2, **caractérisé en ce que** la quantité totale d'eau ajoutée est limitée de sorte que la concentration en métal dans la solution filtrée obtenue soit > 1 %.

4. Procédé selon l'une quelconque des revendications 2 et 3, **caractérisé en ce qu'un** polymère hydrophobisé est ajouté à la solution avant la filtration.

5. Procédé selon l'une quelconque des revendications 2 à 4, **caractérisé en ce que** la filtration est réalisée à travers un tissu filtrant recouvert de terre de diatomées.

6. Procédé selon l'une quelconque des revendications 2 à 5, **caractérisé en ce qu'un** surplus d'acide libre dans le filtrat est neutralisé par l'ajout d'hydroxyde d'aluminium et/ou de fer.

7. Procédé selon l'une quelconque des revendications 2 à 6, **caractérisé en ce que** le pH de la solution est utilisé pour réguler l'ajout d'acide.

8. Procédé selon l'une quelconque des revendications précédentes, **caractérisé en ce que** de l'air et/ou de l'oxygène gazeux sont ajoutés à la réaction entre les boues et l'acide sulfurique.
